# EUROPÄISCHE PATENTSCHRIFT

(11) **EP 2 776 244 B1**
(45) Veröffentlichungstag und Bekanntmachung des Hinweises auf die Patenterteilung: **10.10.2018**
(21) Anmeldenummer: 12726569.2
(22) Anmeldetag: 14.05.2012
(51) Int. Cl.: B32B 25/00, A41B 3/00, A41D 13/00, C08L 9/02

(54) **PROTEKTORELEMENT**
PROTECTOR ELEMENT
ÉLÉMENT PROTECTEUR

(30) Priorität: 09.11.2011 AT 16552011
(43) Veröffentlichungstag der Anmeldung: 17.09.2014
(73) Patentinhaber: Karall, Gerhard, 2620 Neunkirchen (AT)
(72) Erfinder: Karall, Gerhard, 2620 Neunkirchen (AT)
(74) Vertreter: Babeluk, Michael
(86) Internationale Anmeldenummer: PCT/AT2012/050068
(87) Internationale Veröffentlichungsnummer: WO 2013/026077

(56) Entgegenhaltungen:
- WO-A2-02/16492
- DE-T5-112015 003 491
- US-B1- 7 200 870

## Beschreibung

Die Erfindung betrifft ein Protektorelement aus Kunststoff bestehend aus einer Verbindung aus Acrylnitrilkautschuk und mindestens zwei organischen Polymeren, insbesondere eine Helmkalotte mit einem netz- und/oder wabenartigen Kalottenkörper aus Kunststoff.

Bekannte Schutzhelme für Sport und Arbeit sind in der Regel aus drei Funktionselementen aufgebaut, wobei bei manchen Applikationen auch auf ein oder zwei Elemente verzichtet werden kann. Die drei Elemente sind eine Außenschale, ein Aufprallenergie aufnehmender Dämpfungsteil, sowie ein Komfortteil, der auch zur Größenregulierung herangezogen wird. Die Erfindung betrifft aber nicht nur Schutzhelme und deren Aufbau, sondern Protektoren im Allgemeinen, und hier insbesondere eine neuartige Materialzusammensetzung. Solche Protektoren bestehen beispielsweise aus den erwähnten Protektorelementen, die in Schalenkörper eingesetzt sein oder aber auch nur für sich eingesetzt werden können. Beispielsweise seien hier nur Schienbein-, Knie-, Ellenbogen-, Arm- sowie Schulter- und Armprotektoren erwähnt. Ein derartiger Protektor kann beispielsweise der US 7,200,870 B1 entnommen werden.

Die Außenschale derartiger Protektoren besteht in der Regel aus Kunststoff (PP, PUR, etc.), tiefgezogener Folie bzw. faserverstärktem Kunststoff (ggf. einer Karbonschale) und soll einerseits einen Schutz gegen Penetration und andererseits auch Halt für Visiere bieten. Das Dämpfungsteil besteht im Regelfall aus expandiertem Polystyrol (XPS, EPS), welches als Kalotte ausgeformt oder gleich in Verbindung mit einer Tiefziehfolie (Radhelm) verarbeitet wird. Dieses Element nimmt die Energie eines Aufpralls auf und schützt den Kopf vor traumatischen Verletzungen.

In der WO 2002/16492 A2 eine Mischung aus Olefinpolymerisaten und Nitrilkautschuken, ein Verfahren zu deren Herstellung sowie die Verwendung dieser Kunststoffe zur Herstellung von Formkörpern.

Bei Protektoren wird auch geschäumtes N-PVC, PUR, EVA und Silikon ohne und mit einer Hartschale eingesetzt.

Das Komfortteil wird in der Regel aus einem Verbund von sehr leichten Kunststoffschäumen und einem Textil hergestellt und gibt einen weichen Sitz und kann auch durch unterschiedliche Stärken zur Größenanpassung herangezogen werden. Ergänzend dazu sind natürlich noch weitere Funktionselemente, wie Visiere, Kopfbefestigungen und Belüftungsmechaniken, etc. in Anwendung. Für die meisten Helmarten gibt es entsprechende ISO- bzw. EN - Normen, worin der Schutzanspruch und der Leistungsumfang genau beschrieben und Grundlage einer Zertifizierung ist. Das wesentliche Funktionselement ist dabei das Dämpfungsteil, welches durch die zu absorbierende Energie und die maximal erlaubte Verzögerung (in der Regel 250 g) in der Materialstärke definiert ist.

Die bislang verfügbare Materialgruppe für Helme - insbesondere Polystyrol führt zu Materialstärken, welche die Bewegungsfreiheit beschränkende Protektorenelemente bedingen. So wird beispielsweise bei Helmen das Gesichtsfeld eingeschränkt, werden große Umrissänderungen am Kopf verursacht und bedingt die Konstruktion im Wesentlichen einen steifen Aufbau des Helmes. Dies gilt in äquivalenter Weise auch für andere Protektoren. Ein weiterer wesentlicher Nachteil der bislang verwendeten Protektormaterialien liegt darin, dass das Material nach einem einmaligen Aufprall zerstört ist und ein weiterer Aufprall ein hohes Risiko durch einen wesentlich geringeren Schutz bedeutet. Versuche mit anderen Materialgruppen, wie z.B. Polyurethanen waren durch das zu hohe spezifische Gewicht und die damit verbundene zusätzliche Masse nicht zielführend.

Der Erfindung liegt die Aufgabe zugrunde ein Material anzugeben, das unter Beibehaltung wenigstens derselben Schutzfunktion wie ein Helm nach dem Stand der Technik folgendes alternativ und/oder kumulativ erlaubt:
eine Verringerung der Materialstärke, insbesondere zur Erhöhung des Gesichtsfeldes und Verringerung des Luftwiderstandes, eine Verringerung des Gewichtes zur Reduktion der Gesamtschädelmasse und dem damit verbundenen zusätzlichen Pronationsrisiko (Peitschenschlagsyndrom), gegebenenfalls eine Verformungsmöglichkeit zwecks Reduzierung des Packungsvolumens, eine Multi-Aufprall-Fähigkeit zur Erhöhung der Sicherheit bei einem mehrfachen Aufprall, gegebenenfalls einen Penetrationsschutz durch eine verformbare Folie anstatt einer schweren Schale, gegebenenfalls eine Atmungsaktivität des gesamten Helmsystems zur Verhinderung eines Hitzestaus im Helm sowie gegebenenfalls eine leichte Anpassung bzw. keine konstruktive Erfordernis durch flexiblen Aufbau, sowie geringere Anzahl an Helmmodellen. Insbesondere sollen kompakte, hoch effektive Protektoren geschaffen werden.

Die Erfindung löst diese Aufgabe mit den Merkmalen des Anspruches 1. Vorteilhafte Weiterbildungen der Erfindung sind in den Unteransprüchen beschrieben. Insbesondere löst die Erfindung diese Aufgabe dadurch, dass das Protektorelement aus einer Verbindung aus Acrylnitrilkautschuk und mindestens zwei organischen Polymeren besteht, wobei in einem Raster angeordnete, hohlprofilförmige Elemente, die miteinander über radiale Stege verbunden oder als Netzstruktur ausgebildet sind, vorgesehen sind.

Um diese Vorteile zu realisieren wurde eine neue Materialgruppe entwickelt, welche durch Formgestaltung und darauf abgestimmte Materialparameter eine verformbare (zusammenfaltbare) Kalotte mit zum Stand der Technik vergleichbarem Raumgewicht bei verringerter Materialstärke und vergleichbarer Schutzfunktion ergibt. Zudem ist diese Kalotte multi-Aufprall-fähig und atmungsaktiv. Eine derartige Helmkalotte besteht aus einer Verbindung aus Acrylnitrilkautschuk und mindestens zwei organischen Polymeren, wobei die organischen Polymere vorzugsweise aus der Materialgruppe Polynorbornene, Polyvinylchlorid, Ethylenvinylacetat, Polyisoprene, Butyl- und/oder Vinylacetat sind. Als Weichmacher ist vorzugsweise Diisononylphthalat und/oder Terephthalat und/oder phthalatfreie Weichmacher vorgesehen und als Füllstoff ist gegebenenfalls Kieselsäure bzw. Bariumsulfit zugesetzt. Das Protektorelement kann in beliebiger Form vorliegen, beispielsweise als Plattenware, Halbzeug oder Fertigprodukt.

Nach einer vorteilhaften Ausführungsform der Erfindung kann das Protektorelement in einer, vorzugsweise aus tiefziehbarer Folie gefertigten, Schale, insbesondere Helmschale, angeordnet sein. Zudem kann bei einer besonders hohen geforderten Schutzwirkung zwischen Schale und Protektorelement eine Schaumkunststofflage, insbesondere aus Polystyrol, vorgesehen sein. Eine derartige Vorgangsweise empfiehlt sich für Sporthelme, Motorradhelme und dergleichen.

Sind wenigstens zwei Kunststofflagen mit temperaturabhängig unterschiedlichem Formänderungswiderstand vorgesehen, kann das Dämpfungsverhalten des Protektorelements besonders vorteilhaft eingestellt werden. Insbesondere eine Anpassung an diverse temperaturabhängige optimale Arbeitspunkte kann damit realisiert werden. Zwecks Verbesserung des Tragekomforts bzw. der Optik, kann das Protektorelement außenseitig und/oder innenseitig mit einer Textillage ausgestattet sein.

Eine vorteilhafte Helmkalotte umfasst einen netz- und/oder wabenartigen Kalottenkörper aus einem erfindungsgemäßen Protektorelement, wobei der Kalottenkörper in einem Raster angeordnete, hohlprofilförmige Elemente umfasst, die miteinander über radiale Stege verbunden oder als Netzstruktur ausgebildet sind. Der Übergang von netzartigen Strukturen auf wabenartige Strukturen kann dabei fließend sein, weshalb die Wahl der jeweiligen sich dabei ergebenden Rasterstruktur dem Fachmann in Abhängigkeit des Einsatzzweckes überbleibt. Die hohlprofilförmigen Elemente können beispielsweise einen runden, einen kreisrunden, einen viereckigen oder einen polygonförmigen Querschnitt aufweisen.

Besonders vorteilhafte Konstruktions- und Dämpfungsverhältnisse ergeben sich, wenn die hohlprofilförmigen Elemente des Kalottenkörpers reihenweise angeordnet und reihenweise auf Lücke versetzt sind. Zur Begrenzung von Verzögerungswerten im Falle eines Aufpralles kann zudem die Wanddicke der rohrförmigen Elemente und/oder deren Verbindungsstege nach einer Seite hin zunehmen und/oder können die Stege gegenüber der äußeren Stirnseite der hohlprofilförmigen Elemente zurückversetzt sein.

Sollen weitere Temperaturbereiche (beispielsweise -20 bis plus 50°C) mit ein und demselben Helm zumindest annähernd gleich gut abgedeckt werden können, ist es von Vorteil, wenn der Kalottenkörper wenigstens zwei Kunststofflagen mit temperaturabhängig unterschiedlichem Formänderungswiderstand aufweist.

Um eine Penetration des Kalottenkörpers zu verhindern, kann der wabenartige Kalottenkörper in einer Schale, vorzugsweise aus tiefziehbarer Folie, angeordnet sein. Zur Lüftung kann die Schale eine Vielzahl an Perforierungen aufweist, welche vorzugsweise einen Lochdurchmesser von 0,1 bis 5 mm, vorzugsweise 1 mm, aufweisen. Zudem kann die Kalotte innenseitig mit einer Textillage ausgestattet sein.

Um einen flexiblen Helm ohne Penetrationsschutz zu gestalten kann die Kalotte alleine verwendet werden. Besser ist es jedoch die Kalotte außenseitig und/oder innenseitig mit einer, vorzugsweise atmungsaktiven Textillage auszustatten. Zur Fertigung einer erfindungsgemäßen Helmkalotte wird vorzugsweise das Expansionssprungverfahren verwendet.

Ergänzt wird diese Kalotte im Bedarfsfall durch eine vor Penetration schützende Folie, welche lediglich eine Stärke von 0,5 bis 1 mm, vorzugsweise 0,8 mm, aufweist und biegsam ist.

Des Weiteren wird das Komfortelement vorzugsweise nur mehr durch ein hochatmungsaktives Textil (z.B. COOLMAX®) in Verbund mit einem flauschenden Textil ausgeführt, um die Helmstärke weiter zu reduzieren. Durch diese Materialkombination entsteht ein verformbarer Helm, welcher in der Größe durch seine Verformbarkeit in einem gewissen Rahmen selbstanpassend ist, womit Passformprobleme der Vergangenheit angehören.

Zudem sind überall dort, wo die Normen keinen Penetrationsschutz vorschreiben, mit einer Kalotte und einem Textilelement sehr leichte, dünne, komfortable und leicht verstaubare (einsteckbare) Helm-/Haubenlösungen möglich, welche zu höherer Trageakzeptanz führen.

Zusammenfassend eignet sich das erfindungsgemäße Produkt beispielsweise für eine Verwendung als Dämpfungselement, insbesondere in Helmen, Protektoren (wie Rücken-, Brust- oder Gelenksprotektoren), als Schutzwesten, beispielsweise für den Reitsport, oder aber auch in flexiblen Mützen.

Eine mögliche Verwendung des Produktes kann der Austausch von Kalotte und Komfortelement im Zusammenhang mit herkömmlichen Helmschalen sein. Durch die dabei mögliche Verwendung kleinerer Helmschalen, z.B. XS statt L, kann der Stärkenvorteil ohne große Investitionen in Serie umgesetzt werden und können trotzdem einige wesentliche Vorteile generiert werden. Insbesondere die geringere Helmstärke mit Erweiterung des Gesichtsfelds, reduziertes Gesamtgewicht, Multiaufprallfähigkeit und bessere Hinterlüftung durch atmungsaktive Kalotte samt Komfortelement.

Durch Variationen in der Zusammensetzung des erfindungsgemäßen Kunststoffes lässt sich die ideale Arbeitstemperatur in weiten Bereichen einstellen. Zudem kann ein Kalottenkörper aus wenigstens zwei Kunststofflagen mit temperaturabhängig unterschiedlichem Formänderungswiderstand bestehen. Bei Verwendung des Dämpfungselementes für einen Skihelm empfiehlt sich eine ideale Arbeitstemperatur von -20°C für die eine, vorzugsweise die innere, und eine ideale Arbeitstemperatur bei Raumtemperatur für die andere Kunststofflage. Bei Verwendung des Dämpfungselementes für einen Motorradhelm ist beispielsweise eine ideale Arbeitstemperatur, der Temperaturbereich mit dem besten Dämpfungsverhalten, von -20°C für eine, eine ideale Arbeitstemperatur bei Raumtemperatur für eine weitere, und eine ideale Arbeitstemperatur von 50°C für eine dritte Lage vorgesehen.

In der Zeichnung ist die Erfindung an einem Ausführungsbeispiel schematisch dargestellt. Es zeigen
- Fig. 1: einen Ausschnitt einer Innenansicht auf eine erfindungsgemäße abgewickelte Helmkalotte;
- Fig. 2: die Helmkalotte aus Fig. 1 im Schnitt nach der Linie II-II;
- Fig. 3: die Helmkalotte aus Fig. 1 in Außenansicht;
- Fig. 4: die Helmkalotte aus Fig. 3 im Schnitt nach der Linie II-II;
- Fig. 5: eine mehrere Lagen umfassende Helmkalotte im Schnitt;

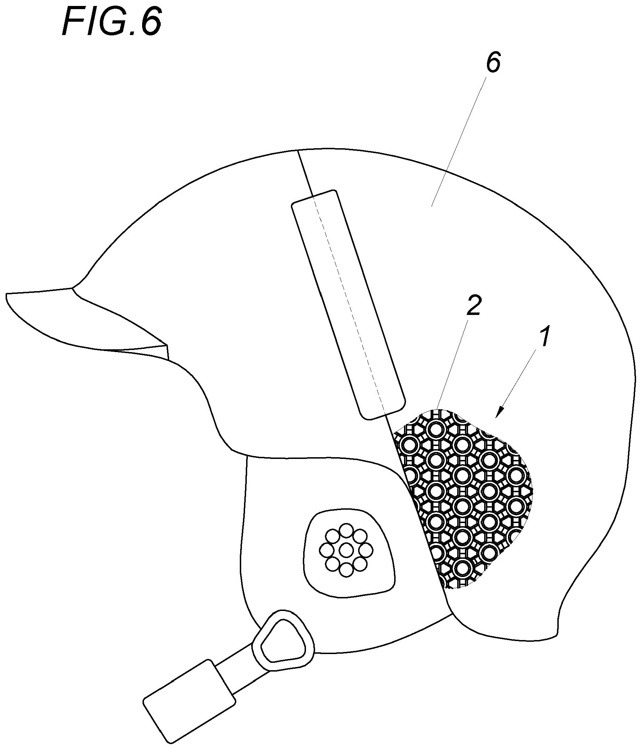

- Fig. 6: einen erfindungsgemäßen Helm in teilgeschnittener Seitenansicht; und
- Fig. 7: eine Konstruktionsvariante des Helmes in teilgeschnittener Seitenansicht.

Ein erfindungsgemäßes Protektorelement 10 besteht aus einer Verbindung aus Acrylnitrilkautschuk und mindestens zwei organischen Polymeren. Das Protektorelement kann in beliebiger Form vorliegen, beispielsweise als Plattenware, Halbzeug oder Fertigprodukt. Im Folgenden wird die Erfindung stellvertretend für die verschiedensten möglichen Protektoren am Beispiel diverser Helmlösungen dargestellt.

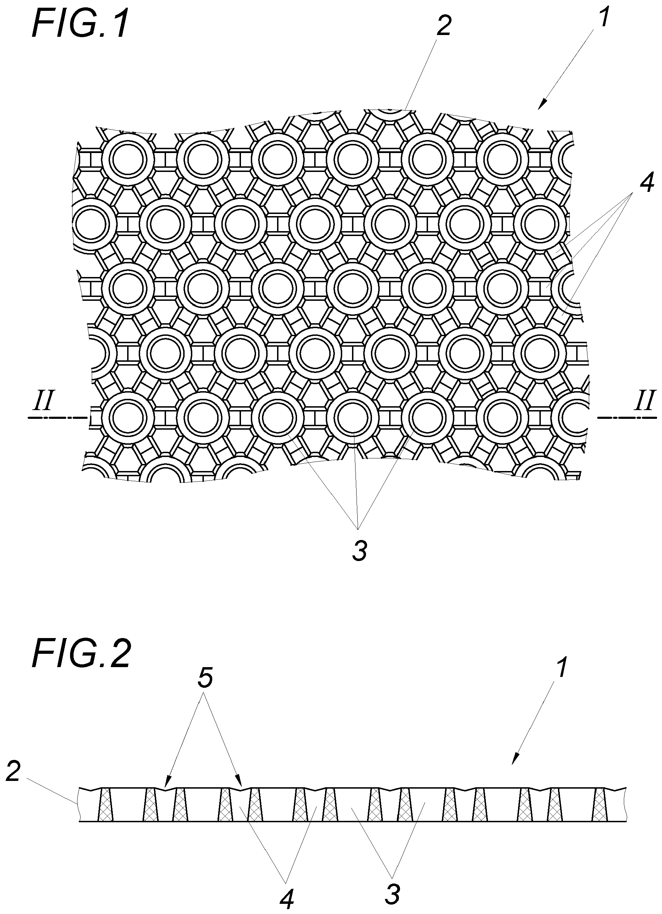

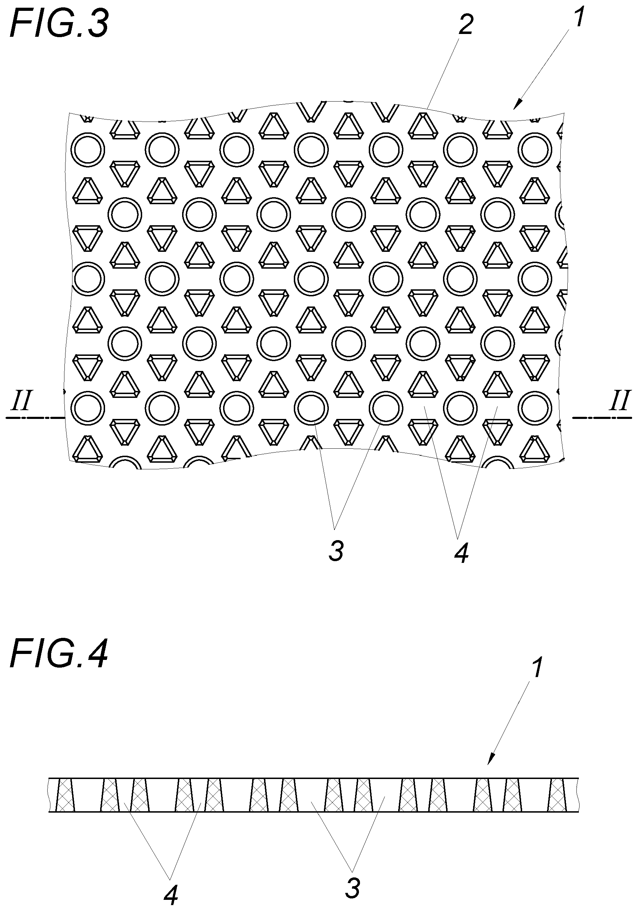

Eine vorteilhafte Helmkalotte 1 umfasst einen netz- und/oder wabenartigen Kalottenkörper 2 aus einem erfindungsgemäßen Protektorelement 10, einem flexiblen, elastischen Kunststoff, der sich dadurch auszeichnet, dass der wabenartige Kalottenkörper 2 in einem Raster angeordnete, hohlprofilförmige, nämlich rohrförmige, Elemente 3 umfasst, die miteinander über radiale Stege 4 verbunden sind, wobei die rohrförmigen Elemente 3 des Kalottenkörpers 2 reihenweise angeordnet und reihenweise auf Lücke versetzt sind. Die Wanddicke der rohrförmigen Elemente 3 und deren Verbindungsstege 4 nimmt nach außen zu, vgl. Fig. 1 und Fig. 3.

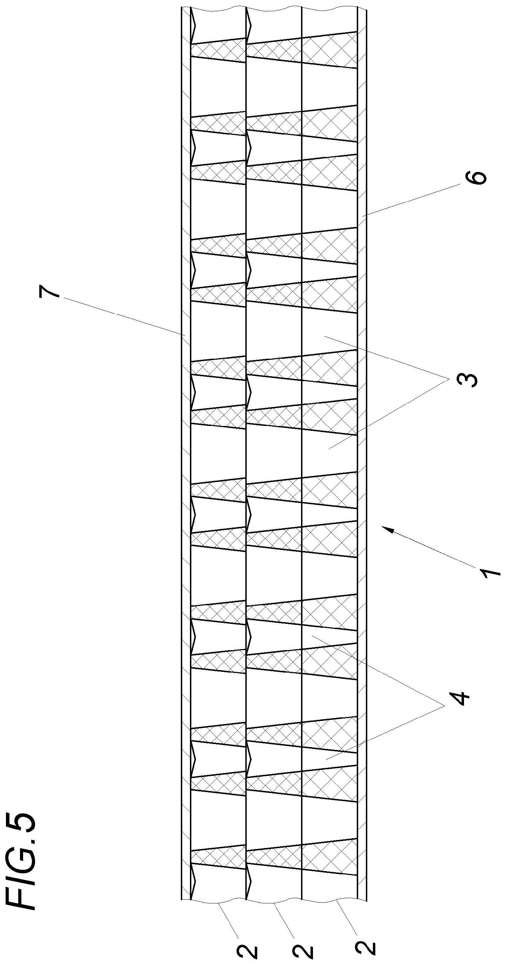

Die Stege 4 sind gegenüber der äußeren Stirnseite der rohrförmigen Elemente 3 zurückversetzt (5). Im Ausführungsbeispiel nach Fig. 5 weist der Kalottenkörper drei Kunststofflagen mit temperaturabhängig unterschiedlichem Formänderungswiderstand auf und der wabenartige Kalottenkörper 2 ist in eine Schale 6, vorzugsweise aus tiefziehbarer Folie, angeordnet und innenseitig mit einer Textillage 7 ausgestattet.

Mit der erfindungsgemäßen Materialkombination kann ein verformbarer Helm geschaffen werden, welcher in der Größe durch seine Verformbarkeit in einem gewissen Rahmen selbstanpassend ist, womit Passformprobleme der Vergangenheit angehören. Zudem sind überall dort, wo die Normen keinen Penetrationsschutz vorschreiben, mit einer Kalotte und einem Textilelement sehr leichte, dünne, komfortable und leicht verstaubare (einsteckbare) Helm-/Haubenlösungen möglich.

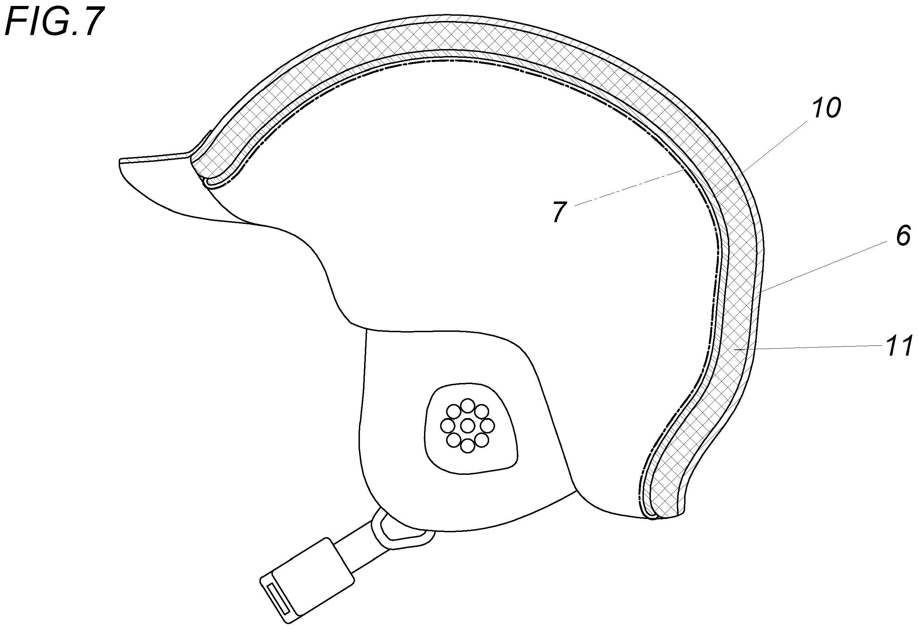

Im Ausführungsbeispiel nach Fig. 7 ist das Protektorelement 10 in einer Schale 6 angeordnet, wobei zwischen Schale 6 und Protektorelement 10 eine Schaumkunststofflage 11, insbesondere aus Polystyrol, vorgesehen ist, um eine besonders hohe Schutzwirkung zu erzielen, wie sie insbesondere bei Helmen im Motorsport erforderlich sind. Das Protektorelement 10 ist in diesem Fall eine einfache Lage aus einem gegebenenfalls kalottenförmig vorgeformten Plattenmaterial. Derartige Helmverbunde lassen sich aber auch besonders vorteilhaft nach dem "in mould" Verfahren herstellen.

## Patentansprüche

1. Protektorelement (10) aus Kunststoff bestehend aus einer Verbindung aus Acrylnitrilkautschuk und mindestens zwei organischen Polymeren, **gekennzeichnet durch** in einem Raster angeordnete, hohlprofilförmige Elemente (3), die miteinander über radiale Stege (4) verbunden oder als Netzstruktur ausgebildet sind.

2. Protektorelement (10) nach Anspruch 1, **dadurch gekennzeichnet, dass** die mindestens zwei organischen Polymere aus der Materialgruppe Polynorbornene, Polyvinylchlorid, Ethylenvinylacetat, Polyisoprene, Butyl- und/oder Vinylacetat gewählt sind.

3. Protektorelement (10) nach Anspruch 1 oder 2, **dadurch gekennzeichnet, dass** als Weichmacher Diisononylphthalat, Terephthalat oder ein phthalatfreier Weichmacher vorgesehen ist.

4. Protektorelement (10) nach einem der Ansprüche 1 bis 3, **dadurch gekennzeichnet, dass** als Füllstoff Kieselsäure oder Bariumsulfit zugesetzt ist.

5. Protektorelement (10) nach einem der Ansprüche 1 bis 4, **dadurch gekennzeichnet, dass** die hohlprofilförmigen Elemente (4) reihenweise angeordnet und reihenweise auf Lücke versetzt sind.

6. Protektorelement (10) nach einem der Ansprüche 1 bis 5, **dadurch gekennzeichnet, dass** die Wanddicke der hohlprofilförmigen Elemente (3) und/oder deren Verbindungsstege (4) nach einer Seite hin, zur Innenseite oder zur Außenseite hin, zunimmt.

7. Protektorelement (10) nach einem der Ansprüche 1 bis 6, **dadurch gekennzeichnet, dass** die Stege (4) gegenüber der äußeren Stirnseite der rohrförmigen Elemente (3) zurückversetzt sind.

8. Protektorelement (10) nach einem der Ansprüche 1 bis 7, **dadurch gekennzeichnet, dass** es in einer, vorzugsweise aus tiefziehbarer Folie gefertigten, Schale, insbesondere Helmschale(6), angeordnet ist.

9. Protektorelement (10) nach Anspruch 8, **dadurch gekennzeichnet, dass** zwischen Schale und Protektorelement eine Schaumkunststofflage (11), insbesondere aus Polystyrol, vorgesehen ist.

10. Protektorelement (10) nach einem der Ansprüche 1 bis 9, **gekennzeichnet durch** wenigstens zwei Kunststofflagen mit temperaturabhängig unterschiedlichem Formänderungswiderstand.

11. Protektorelement (10) nach einem der Ansprüche 8 bis 10, **dadurch gekennzeichnet, dass** es außenseitig und/oder innenseitig mit einer Textillage (7) ausgestattet ist.

12. Verwendung des Protektorelements (10) nach einem der Ansprüche 1 bis 11 in einer Helmkalotte mit einem netz- und/oder wabenartigen Kalottenkörper (2), **dadurch gekennzeichnet, dass** der Kalottenkörper (2) wenigstens zwei Kunststofflagen mit temperaturabhängig unterschiedlichem Formänderungswiderstand aufweist.

13. Verwendung nach Anspruch 12, **dadurch gekennzeichnet, dass** der Kalottenkörper (2) in einer, vorzugsweise aus tiefziehbarer Folie gefertigten, Helmschale (6) angeordnet ist.

14. Verwendung nach Anspruch 13, **dadurch gekennzeichnet, dass** die Helmschale (6) eine Vielzahl an Perforierungen aufweist, welche vorzugsweise einen Lochdurchmesser von 0,1 mm bis 5 mm, vorzugsweise 1 mm, aufweisen.

## Claims

1. Protector element (10) made of plastic consisting of a compound of acrylonitrile rubber and at least two organic polymers, **characterised by** hollow profile-shaped elements (3) which are arranged in a grid and are connected to each other via radial webs (4) or are formed as a mesh structure.

2. Protector element (10) according to claim 1, **characterised in that** the at least two organic polymers are selected from the material group polynorbornene, polyvinyl chloride, ethylene vinyl acetate, polyisoprene, butyl and/or vinyl acetate.

3. Protector element (10) according to claim 1 or 2, **characterised in that** diisononyl phthalate, terephthalate or a phthalate-free plasticizer is provided as a plasticizer.

4. Protector element (10) according to one of the claims 1 to 3, **characterised in that** silica or barium sulphite is added as filler.

5. Protector element (10) according to one of the claims 1 to 4, **characterised in that** the hollow profile-shaped elements (4) are arranged in rows and are staggered in rows in an offset manner with a gap therebetween.

6. Protector element (10) according to one of the claims 1 to 5, **characterised in that** the wall thickness of the hollow profile-shaped elements (3) and/or their connecting webs (4) increases towards one side, towards the inside or towards the outside.

7. Protector element (10) according to one of the claims 1 to 6, **characterised in that** the webs (4) are set back relative to the outer face end of the tubular elements (3).

8. Protector element (10) according to one of the claims 1 to 7, **characterised in that** it is arranged in a shell, preferably made of thermoformable film, in particular a helmet shell (6).

9. Protector element (10) according to claim 8, **characterised in that** a foam plastic layer (11), in particular of polystyrene, is provided between shell and protector element.

10. Protector element (10) according to one of the claims 1 to 9, **characterised by** at least two plastic layers with deformation resistance that differs depending on the temperature.

11. Protector element (10) according to one of the claims 8 to 10, **characterised in that** it is equipped on the outside and/or inside with a textile layer (7).

12. Use of the protector element (10) according to one of the claims 1 to 11 in a helmet shell with a mesh-type and/or honeycomb-type plastic cap body (2), **characterised in that** the plastic cap body (2) has at least two plastic layers with deformation resistance that differs depending on the temperature.

13. Use according to claim 12, **characterised in that** the plastic cap body (2) is arranged in a helmet shell (6), preferably made of thermoformable film.

14. Use according to claim 13, **characterised in that** the helmet shell (6) has a plurality of perforations, which preferably have a hole diameter of 0.1 mm to 5 mm, preferably 1 mm.

## Revendications

1. Elément de protection (10) en matériau synthétique constitué par un composé d'acrylonitrile caoutchouc et d'au moins deux polymères organiques,
**caractérisés par**
des éléments (3) en forme de profilés creux positionnés dans une trame qui sont reliés entre eux par des barrettes radiales (4) ou sont réalisés sous la forme d'une structure en réseau.

2. Elément de protection (10) conforme à la revendication 1,
**caractérisé en ce que**
les polymères organiques sont choisis dans le groupe formé par les polymères suivants : poly-norbornène, chlorure de polyvinyle, éthylène vinyl acétate, poly-isoprène, acétate de butyle et/ou acétate de vinyle.

3. Elément de protection (10) conforme à la revendication 1 ou 2,
**caractérisé en ce qu'**
il est prévu, en tant que plastifiant, du diisononyl phtalate, du téréphtalate, ou un plastifiant exempt de phtalate.

4. Elément de protection (10) conforme à l'une des revendications 1 à 3,
**caractérisé en ce que**
l'on ajoute en tant que charge, de l'acide silicique ou du sulfite de baryum.

5. Elément de protection (10) conforme à l'une des revendications 1 à 4,
**caractérisé en ce que**
les éléments en forme de profilé creux (4) sont disposés en rangées ou décalés en chicanes selon des rangées.

6. Elément de protection (10) conforme à l'une des revendications 1 à 5,
**caractérisé en ce que**
l'épaisseur de paroi des éléments en forme de profilés creux (3) et/ou de leurs barrettes de liaison (4) augmente, à partir d'un côté vers le côté interne ou vers le côté externe.

7. Elément de protection (10) conforme à l'une des revendications 1 à 6,
**caractérisé en ce que**
les barrettes (4) sont décalées en arrière par rapport aux côtés frontaux externes des éléments (3) en forme de tubes.

8. Elément de protection (10) conforme à l'une des revendications 1 à 7,
**caractérisé en ce qu'**
il est monté dans une coque, en particulier une coque en forme de casque (6) obtenue de préférence à partir d'une feuille pouvant être soumise à un thermoformage.

9. Elément de protection (10) conforme à la revendication 8,
**caractérisé en ce qu'**
il est prévu entre la coque et l'élément de protection une couche de matériau synthétique en mousse (11) en particulier en polystyrène.

10. Elément de protection (10) conforme à l'une des revendications 1 à 9,
**caractérisé par**
au moins deux couches en matériau synthétique ayant des résistances à la variation de forme différentes en fonction de la température.

11. Elément de protection (10) conforme à l'une des revendications 8 à 10,
**caractérisé en ce qu'**
il est équipé d'une couche textile (7) côté externe et/ou côté interne.

12. Utilisation d'un élément de protection (10) conforme à l'une des revendications 1 à 11, dans une calotte de casque ayant un corps de calotte (2) de type réseau et/ou nid d'abeille,
**caractérisée en ce que**
le corps de calotte (2) comporte au moins deux couches en matériau synthétique ayant des résistances à la variation de forme différentes en fonction de la température.

13. Utilisation conforme à la revendication 12,
**caractérisée en ce que**
le corps de calotte (2) est monté dans une coque de casque (6) réalisée de préférence à partir d'une feuille pouvant être soumise à un emboutissage profond.

14. Utilisation conforme à la revendication 13,
**caractérisée en ce que**
la coque de casque (6) comporte un ensemble de perforations qui ont, de préférence un diamètre de 0,1 mm à 5 mm, de préférence de 1 mm.
